# EUROPEAN PATENT APPLICATION

(11) **EP 1 189 180 A2**
(43) Date of publication of application: **20.03.2002**
(21) Application number: 01117110.5
(22) Date of filing: 13.07.2001
(51) Int. Cl.: G07F 17/16, H04L 29/06

(54) **Information service providing method**

(30) Priority: 17.07.2000 JP 2000216484
(71) Applicant: Pioneer Corporation, Meguro-ku, Tokyo (JP)
(72) Inventor: Shioda, Takehiko, c/o Pioneer Corporation, Tsurugashima-shi, Saitama 350-2288 (JP); Tanaka, Takuya, c/o Pioneer Corporation, Tokyo (JP); Saito, Yukitaka, c/o Pioneer Corporation, Tsurugashima-shi, Saitama 350-2288 (JP)
(74) Representative: Manitz, Finsterwald & Partner Gbr

(57) **Abstract**

An information service providing method with higher security. When a request from an information terminal is received through a first communication line, a reply to this request is sent to the information terminal through not only the first communication line but also a second communication line different from the first communication line depending on the content of the request.

## Description

### BACKGROUND OF THE INVENTION

### 1. Field of the Invention

The invention relates to an information service providing method for providing an information service on a communication line.

### 2. Description of the Related Background Art

Recently, electronic commerce for conducting a sale of desired products (including various kinds of information) by using a wide area network such as the Internet is on the increase. This electronic commerce involves, for example, publication of product catalogs on the Internet, as well as so-called electronic settlement in which payment transactions for product prices are also performed over the Internet.

In shopping through such electronic commerce, an intending buyer of a product starts with informing the seller who deals the desired product of his/her name, telephone number, address, correspondent bank account, and the like as his/her own personal information. The product seller issues a password unique to such personal information, and registers the same in association with the personal information. The product seller also sends the password to the intending buyer of the product over the Internet. Here, the intending buyer of the product sends information designating the product he/she wants to purchase, accompanied with the above-mentioned password, to the product seller over the Internet. At this moment, the product seller first conducts personal certification based on whether or not the password transmitted is a pre-registered one. Then, if and only if this password is found to be registered already, the product seller performs the shipping procedure of the wanted product. Besides, the product seller makes a withdraw of the price of the wanted product from the bank account specified in the personal information that corresponds to the password.

According to the electronic commerce as described above, consumers can make payments for product prices easily without visiting shops.

Nevertheless, passwords as described above can be monitored by others on the Internet, having a problem in terms of security.

### OBJECTS AND SUMMARY OF THE INVENTION

The present invention has been made to solve the foregoing problem. It is thus an object of the present invention to provide an information service providing method having a higher level of security.

An information service providing method according to the present invention is an information service providing method for providing an information service to a plurality of information terminals through a communication line, including the steps of: receiving a request from the information terminal through a first communication line; and sending a reply to the request to the information terminal through not only the first communication line but also a second communication line different from the first communication line depending on the content of the request.

### BRIEF DESCRIPTION OF THE DRAWINGS

Fig. 1 is a diagram showing the configuration of an electronic commerce system which adopts the information service providing method according to the present invention to conduct a product sale over the Internet;
Fig. 2 is a chart showing a data communication flow for making a product purchase by using electronic settlement services in the electronic commerce system shown in Fig. 2;
Fig. 3 is a diagram showing a user ID entry page to be displayed on a display 1a of a user terminal 1;
Fig. 4 is a diagram showing an example of a onetime password entry page to be displayed on the display 1a of the user terminal 1;
Fig. 5 is a diagram showing another example of the onetime password entry page to be displayed on the display 1a of the user terminal 1;
Fig. 6 is a chart showing another example of the data communication flow for making a product purchase by using the electronic settlement services in the electronic commerce system shown in Fig. 1;
Fig. 7 is a chart showing an example of a data communication flow to be performed when unauthorized access is made; and
Fig. 8 is a chart showing another example of the data communication flow to be performed when unauthorized access is made.

### DETAILED DESCRIPTION OF THE PREFERRED EMBODIMENTS

Hereinafter, an embodiment of the present invention will be described in detail with reference to the drawings.

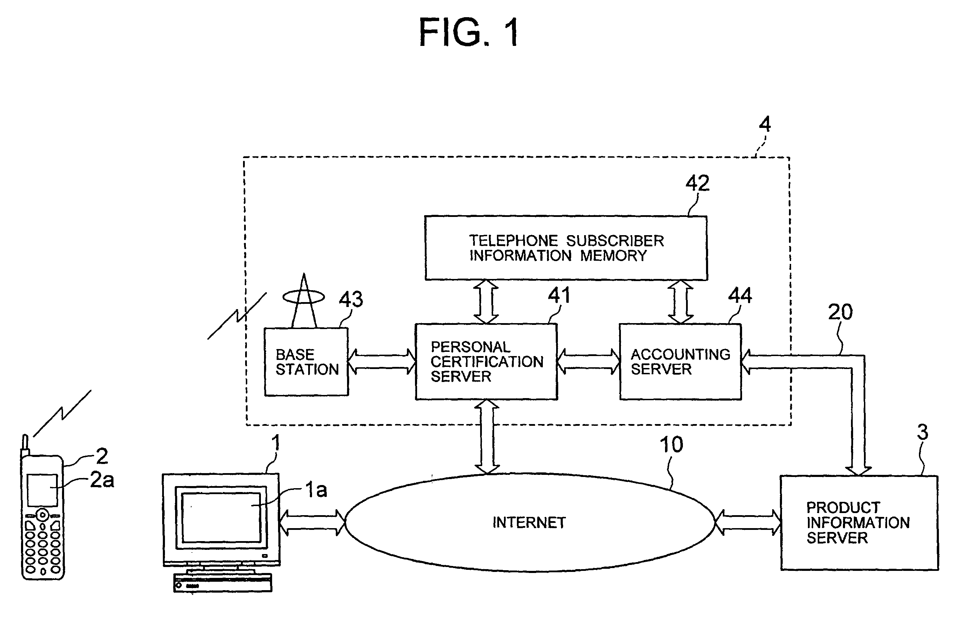

Fig. 1 is a diagram showing the configuration of an electronic commerce system which adopts the information service providing method according to the present invention to conduct a product sale over the Internet.

The electronic commerce system shown in Fig. 1 comprises a user terminal 1, a portable telephone 2, a product information server 3, and an electronic settlement center 4. The user terminal 1, the product information sever 3, and the electronic settlement center 4 each are connected to a wide area network, or the Internet line network 10. Note that the electronic settlement center 4 and the product information server 3 are also connected to each other through a dedicated line 20. Incidentally, Fig. 1 shows only a single user terminal 1 and a single product information server 3 for the sake of simplicity in description. In reality, a plurality of user terminals 1 and a plurality of product information servers 3 are connected to the Internet line network 10.

The user terminal 1, or a first information terminal, is composed of e.g. a personal computer or the like. The user terminal 1 is used as a user window in purchasing a product by using this electronic commerce system.

The portable telephone 2, or a second information terminal, is capable of telephone communications with other subscribers and data communications with the electronic settlement center 4 through telephone communications using switched subscriber lines provided by a portable telephone carrier (company). The electronic settlement services effected by the above-mentioned electronic settlement center 4 are available to the owner of this portable telephone 2 (whereas user registration is required). The portable telephone 2 is used not only to make the user registration but also to receive a onetime password (to be described later) issued upon a product purchase. Note that the personal information (name, correspondent bank name, and account number) of the owner of the portable telephone 2 is previously registered with the electronic settlement center 4.

The product information server 3 offers product catalog information (text, images, sounds, and the like) listing a variety of products the seller deals (including pieces of information such as music pieces, visuals, and computer programs) on a Web site over the Internet line network 10. Moreover, the product information server 3 accepts product purchase requests from registered users, and performs such processing as the billing of product prices and the shipping of products.

The electronic settlement center 4, operated by the portable telephone carrier and/or others, is composed of a personal certification server 41, a telephone subscriber information memory 42, a base station 43, and an accounting server 44. The electronic settlement center 4 is the provider of the above-mentioned electronic settlement services for carrying out the payments of product prices to sellers on behalf of registered users.

The personal certification server 41 issues a user ID in response to a registration request for the electronic settlement services. Then, the personal certification server 41 reads personal information pertaining to this registration requester for the electronic settlement services from the telephone subscriber information memory 42, and overwrites the personal information accompanied with the above-mentioned user ID to the telephone subscriber information memory 42. Here, the telephone subscriber information memory 42 previously stores telephone subscribers' names, addresses, telephone numbers, correspondent bank names, account numbers, and the like as the personal information of the individual telephone subscribers. Besides, the personal certification sever 41 conducts the certification of the above-mentioned user ID, and the issuance and certification of onetime passwords. The base station 43 relays ordinary calls by portable telephones, as well as receives the user registration request for the electronic settlement services sent from the portable telephone 2 and supplies the same to the personal certification server 41 described above. Then, the base station 43 sends the user ID issued by the personal certification server 41 to the requesting portable telephone 2. Moreover, the base station 43 sends the onetime password issued by the personal certification server 41 to the portable telephone 2. The accounting server 44, in response to the billing of product prices from the product information server 3, reads the personal information corresponding to the user ID certified by the personal certification server 41 from the telephone subscriber information memory 42, and makes the withdrawal of the product prices from the bank account specified therein. At the same time, the accounting server 44 makes the payment of the product prices to a bank account of the seller who presents the products on the product information server 3.

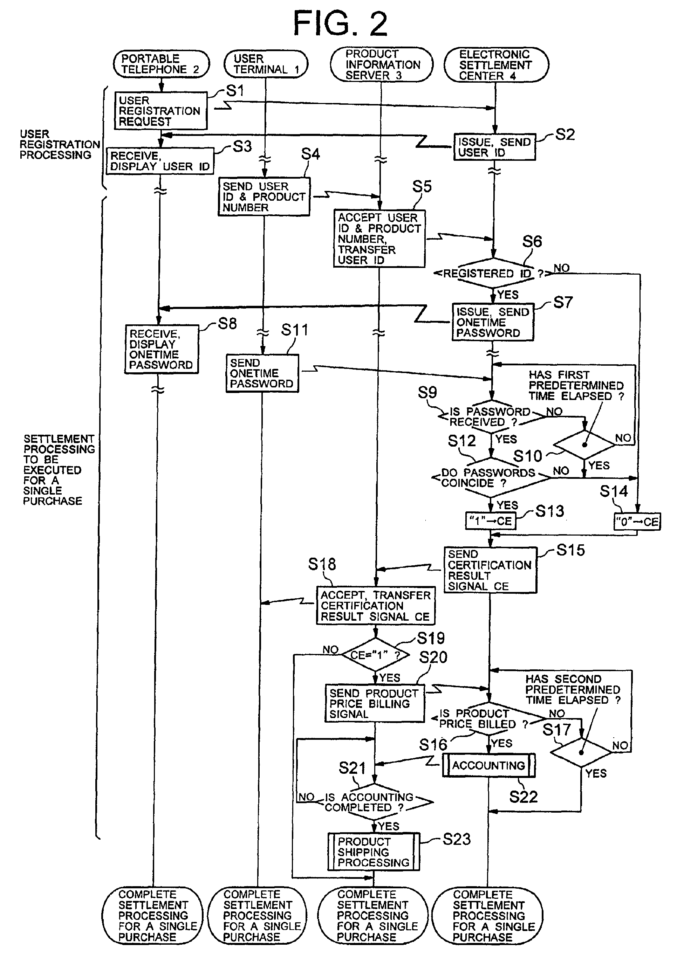

Hereinafter, data communication operations for making a product purchase by using the electronic settlement services will be described with reference to a data communication flow of Fig. 2.

To obtain the electronic settlement services, the owner of the portable telephone 2 initially operates the portable telephone 2 so as to make user registration for the electronic settlement services.

In accordance with such an operation, the portable telephone 2 sends a user registration request signal to the electronic settlement center 4 (step S1).

The base station 43 installed in the electronic settlement center 4 receives the user registration request signal, and supplies this user registration request signal to the personal certification server 41. The personal certification server 41 first issues a user ID in response to the user registration request signal. Then, the personal certification server 41 reads the personal information of the owner of the portable telephone 2, or the sender of this user registration request signal, from the telephone subscriber information memory 42. The personal certification server 41 overwrites the personal information accompanied with the above-mentioned user ID to the telephone subscriber information memory 42. In addition, the personal certification sever 41 supplies the user ID issued as described above to the base station 43. It follows that the base station 43 makes portable telephone communications through the switched subscriber lines to have the above-mentioned user ID sent to only the portable telephone 2 belonging to the registered user (step S2).

Upon receiving the user ID, the portable telephone 2 displays the same on its display 2a (step S3).

Through the series of operations as described above, the owner of the portable telephone 2 completes the user registration for obtaining the electronic settlement services.

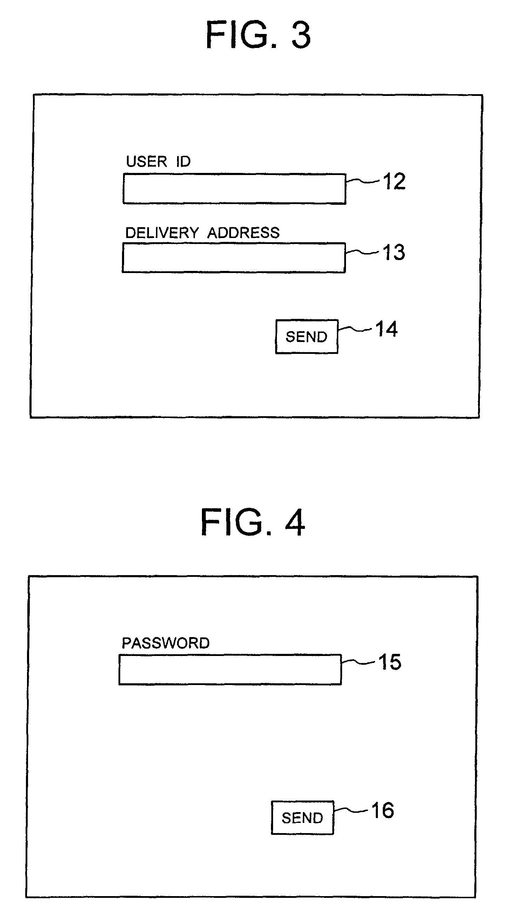

The owner of the portable telephone 2 who has completed of the user registration (hereinafter, referred to simply as registered user) browses from the user terminal 1 the product catalog information published by the product information server 3 over the Internet line network 10. Here, when the registered user operates the user terminal 1 to designate a desired product out of the product catalog information and make a purchase request, the user terminal 1 initially displays a user ID entry page as shown in Fig. 3 onto its display 1a. The registered user enters the user ID obtained as described above into a user ID input field 12 shown in Fig. 3. Moreover, the registered user enters an address showing the delivery destination of the product (e-mail address if the product is information data such as sound, image, and program data) into a delivery address entry field 13. Then, the registered user makes a mouse operation or the like to click the SEND button 14 displayed on this page. In response to this click operation, the user terminal 1 makes a product purchase request by sending the information showing both the delivery address entered in the delivery address entry field 13 and the product number of the desired product designated by the registered user to the product information server 3 over the Internet line network 10. The user terminal 1 also sends the user ID entered in the user ID entry field 12 to the product information server 3 over the Internet line network 10 (step S4). In this connection, when the click operation is made, the user terminal 1 switches the contents on the display 1a to a password entry page as shown in Fig. 4.

The product information server 3, upon receiving the product purchase request from the user terminal 1 by receiving the user ID, the delivery address, and the product number information over the Internet line network 10, stores the same into a purchase reception memory (not shown). Then, the product information server 3 sends a onetime password request signal, accompanied with this user ID, to the electronic settlement center 4 over the Internet line network 10 (step S5). Incidentally, the product information server 3 may send the onetime password request signal to the electronic settlement center 4 through the dedicated line 20 instead of the Internet line network 10. When the onetime password request signal is thus sent through the dedicated line 20, the return timing of the onetime password from the electronic settlement center 4 becomes unpredictable to exterior, with an increase in the degree of security protection.

The personal certification server 41 in the electronic settlement center 4 accepts the user ID transferred, and determines whether or not this user ID is previously stored in the telephone subscriber information memory 42 (step S6). If it is determined at this step S6 that the user ID is a pre-stored one in the telephone subscriber information memory 42, i.e., if the user ID transferred is pre-registered, then the personal certification sever 41 issues a onetime password in accordance with the onetime password request signal and supplies the same to the base station 43. It follows that the base station 43 makes portable telephone communications through the switched subscriber lines to send this onetime password to only the portable telephone 2 belonging to the registered user (step S7). Incidentally, the personal certification server 41 issues a new onetime password each time this step S7 is executed. That is, a new onetime password is issued for each purchase (accounting).

The portable telephone 2, on receiving the onetime password send from the electronic settlement center 4 at the stage of step S7, displays the same on the display 2a (step S8).

In the meantime, the personal certification server 41 determines whether or not the onetime password is received through the Internet line network 10 (step S9). If it is determined at this step S9 that the onetime password mentioned above is not received, the personal certification server 41 determines whether or not a first predetermined time has elapsed since the execution of step S7 (step S10). If it is determined at step S10 that the first predetermined time has not elapsed yet, the certification server 41 returns to the execution of step S9 to wait for the reception of the onetime password until the elapse of the first predetermined time.

Here, the registered user enters the onetime password displayed on the display 2a of the portable telephone 2 as described above into a password entry field 15 on the password entry page displayed on the display 1a of the user terminal 1 as shown in Fig. 4. Then, the registered user makes a mouse operation or the like to click the SEND button 16 displayed on this page. In response to this click operation, the user terminal 1 sends the onetime password to the electronic settlement center 4 over the Internet line network 10 (step S11).

It follows that the personal certification server 41 in the electronic settlement center 4 determines at step S9 that the onetime password is returned. The personal certification server 41 then determines whether or not this onetime password returned is identical to the one having been sent at step S7 (step S12). At step S12, if the onetime password having been sent and the onetime password returned coincide with each other, the personal certification server 41 stores a certification result signal CE having a logic level of "1," which indicates that personal certification is granted normally, into a (not-shown) certification result register (step S13). On the other hand, if the two do not coincide with each other, if it is determined at the foregoing step S10 that the first predetermined time has elapsed, or if it is determined at the foregoing step S6 that the user ID is not registered yet, the personal certification server 41 stores the certification result signal CE having a logic level of "0," which indicates that the personal certification is rejected, into the certification result register mentioned above (step S14). After the completion of step S13 or S14, the personal certification server 41 sends the certification result signal CE to the product information server 3 through the dedicated line 20 (step S15). Next, the personal certification server 41 determines whether or not a product price billing signal from the product information server 3 is received (step S16). If it is determined at this step S16 that the product price billing signal mentioned above is not received, the personal certification server 41 determines whether or not a second predetermined time has elapsed since the execution of step S15 (step S17). If it is determined at step S17 that the above-mentioned second predetermined time has not elapsed yet, the personal certification server 41 returns to the execution of step S17, repeating the determination as to the reception of the product price billing signal as described above until the elapse of the second predetermined time.

Meanwhile, the product information server 3, when receives the certification result signal CE from the electronic settlement center 4 through the dedicated line 20, transfers the same to the user terminal 1 over the Internet line network 10 (step S18). Here, the electronic settlement center 4 may send the certification result signal CE to the portable telephone 2 directly. Next, the product information server 3 determines whether or not the certification result signal CE has a logic level of "1" (step S19). If it is determined at this step S19 that the certification result signal CE has the logic level of "1," the product information server 3 sends to the electronic settlement center 4 the product price billing signal for billing the product price corresponding to the product number stored in the purchase reception memory mentioned above (step S20). In other words, the product information server 3 bills the product price to the electronic settlement center 4 only if the personal certification server 41 grants the personal certification. Note that this billing of the product price is conducted through the dedicated line 20. Then, the product information server 3 makes a determination as to whether or not an accounting completion signal from the electronic settlement center 4 is received through the dedicated line 20, until this accounting completion signal is received (step S21).

Here, when the foregoing step S20 is executed to conduct the billing of the product price from the product information server 3, the accounting server 44 in the electronic settlement center 4 executes accounting in accordance with this billing of the product price (step S22). To be more specific, the accounting server 44 initially reads the personal information corresponding to the user ID certified by the personal certification server 41 as described above from the telephone subscriber information memory 42. The accounting server 44 then makes the withdrawal of the product price from the bank account specified therein. At the same time, the accounting server 44 makes the payment of the product price to a bank account of the seller who presents the product on the product information server 3. Then, the accounting server 44 sends the accounting completion signal to the product information server 3 through the dedicated line 20. In this connection, if it is determined at step S17 that the second predetermined time has elapsed, i.e., if the product price is not billed before the elapse of the second predetermined time since the execution of the foregoing step S15, the accounting server 44 will not perform the above-described accounting. On this occasion, the accounting server 44 sends massage information indicating that the payment of the product price is rejected, to the portable telephone 2 through the base station 43.

Upon receiving the accounting completion signal through the dedicated line 20, the product information server 3 reads the delivery address and the product number stored in the above-mentioned purchase reception memory, and issues an instruction to a distribution center (not shown) to ship the product designated by this product number to the delivery address (step S23). The distribution center accordingly ships the product designated by the product number to the delivery address.

As has been described, in purchasing a product by using the electronic settlement services, the owner of the portable telephone 2 starts with making user registration for the electronic settlement services to obtain a user ID from the electronic settlement center 4 (steps S1 to S3). Here, the registered user sends the user ID, along with a purchase request for the desired product, to the product information server 3 on the product-seller side over the Internet (step S4). That is, the user ID is sent over the Internet line network 10 to request the issuance of a onetime password. On this occasion, the product information server 3 transfers this user ID to the electronic settlement center 4 (step S5). It follows that the electronic settlement center 4 issues a onetime password for each purchase, and sends the same to only the portable telephone 2 belonging to the registered user through portable telephone communications using the switched subscriber lines (steps S6 and S7). Then, the registered user sends the onetime password issued by the electronic settlement center to the electronic settlement center 4 over the Internet (step S11). It follows that the electronic settlement center 4 certifies that this product purchase requester is the registered user, based on whether or not the onetime password transmitted is identical to the one issued. The electronic settlement center 4 provides the certification result to the product information server 3 on the product-seller side (steps S12 to S15). Based on the certification result, the product information server 3 bills the product price to the electronic settlement center 4 only if the product purchase requester is certified to be the registered user (steps S18 to S20). It follows that the electronic settlement center 4 makes the payment of the product price to the product seller on behalf of the owner of the portable telephone 2 (step S22).

As seen from above, in the electronic commerce using the electronic settlement system, product orders from registered users are accepted through the Internet line. In the case of informing the registered users of passwords, in contrast, the passwords are sent to only the portable telephones belonging to the registered users, by means of telephone communications through the switched subscriber lines.

This reduces the possibility of external leakage of passwords, allowing commerce of higher security.

Moreover, while in the embodiment described above the onetime password is sent to the portable telephone 2 belonging to the registered user, it may be sent to a wire telephone, a fax, or the like belonging to this registered user. In other words, any type telecommunication equipment may be used therefor irrespective of type as long as it is capable of receiving onetime passwords through a communication line that can temporarily occupy the communication with the electronic settlement center 4.

Furthermore, not only the onetime password but also the balance on the correspondent bank account and other information of the registered user may be sent to the telephone belonging to the registered user. Besides, while the two information terminals, the user terminal 1 and the portable telephone 2, are used in the embodiment described above, only a single information terminal may be used. That is, a single information terminal is sufficient if it can make access to the Internet line and the switched subscriber lines at the same time. In some cases, secret information of relatively lower confidentiality may be sent to the registered user over the Internet. Therefore, sending secret information to the registered user may involve having the registered user select the medium to send it through, the switched subscriber lines or the Internet line.

In short, the present invention uses the Internet line when requests for onetime passwords or secret information such as the balance on an account are made from the information-terminal side. In contrast, the sending of secret information to the information-terminal side uses not only the Internet line but also the switched subscriber lines which are high in confidentiality during the process of transmission. This allows the provision of high security information services.

Moreover, in the embodiment described above, the registered user enters the onetime password and user ID displayed on the display 2a of the portable telephone 2 into the user terminal 1 by his/her own hand. These onetime password and user ID, however, may be transmitted from the portable telephone 2 to the user terminal 1 instead. In this case, the portable telephone 2 incorporates a transmitter for transmitting the onetime password and user ID to the user terminal 1 by using a short-range radio interface such as Bluetooth. Besides, the user terminal 1 incorporates a receiver for receiving these onetime password and user ID through the short-range radio interface mentioned above.

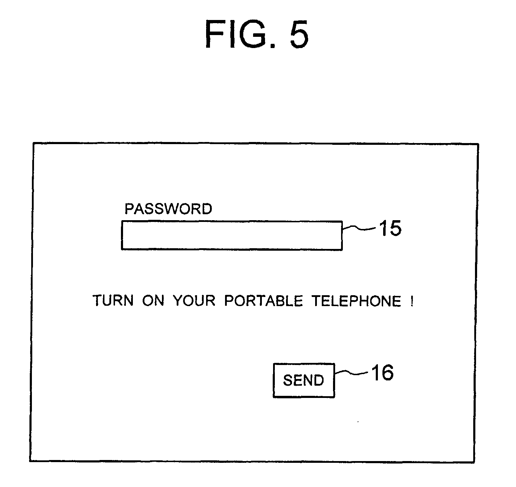

Now, in order for the registered user to receive onetime passwords, the portable telephone 2 must be powered on. However, turning the power on can be forgotten about. Then, a password entry page shown in Fig. 5 may be displayed on the display 1a of the user terminal 1, instead of the one shown in Fig. 4, so as to prompt the registered user to turn on the portable telephone 2. On this password entry page shown in Fig. 5, a message "Turn on your portable telephone!" blinks beside the password entry field 15 and the SEND button 16, prompting the turning-on of the portable telephone 2. Alternatively, the electronic settlement center 4 may monitor the on/off state of the portable telephone 2 and make remote operations so that the password entry page to be displayed on the display 1a of the user terminal 1 is switches from the one shown in Fig. 4 to the one shown in Fig. 5 only if the portable telephone 2 is off. More specifically, when the above-described step S5 is executed to send a user ID to the electronic settlement center 4, the electronic settlement center 4 first monitors the on/off state of the portable telephone 2 belonging to the registered user specified by the user ID. Here, if the portable telephone 2 is in the off state, the electronic settlement center 4 accesses the IP address of the sender of the user ID over the Internet line network 10, sending a command to the user terminal 1 to display the password entry page as shown in Fig. 5.

Moreover, in the embodiment described above, the personal certification through onetime passwords (steps S4 to S15) is carried out in order for the product information server 3 to determine whether or not to bill the product price. This personal certification through onetime passwords, however, may be used to determine whether or not to give users an authority to browse the Web site (publishing product information) provided by the product information server 3. In other words, the personal certification through onetime passwords, shown in the above-described steps S4 to S15, is performed to allow only registered users to browse the Web site.

Furthermore, in the embodiment described above,' the electronic settlement center 4 executes the verification of the onetime password returned from the user terminal (steps S9, S10, and S12) immediately after the issuance of the onetime password (step S7). Here, it is impossible for a third party to know the content of the onetime password issued from the electronic settlement center 4. Nevertheless, if one of onetime passwords entered at random by a third party accidentally matches with the onetime password issued from the electronic settlement center 4, personal certification will be granted unjustly.

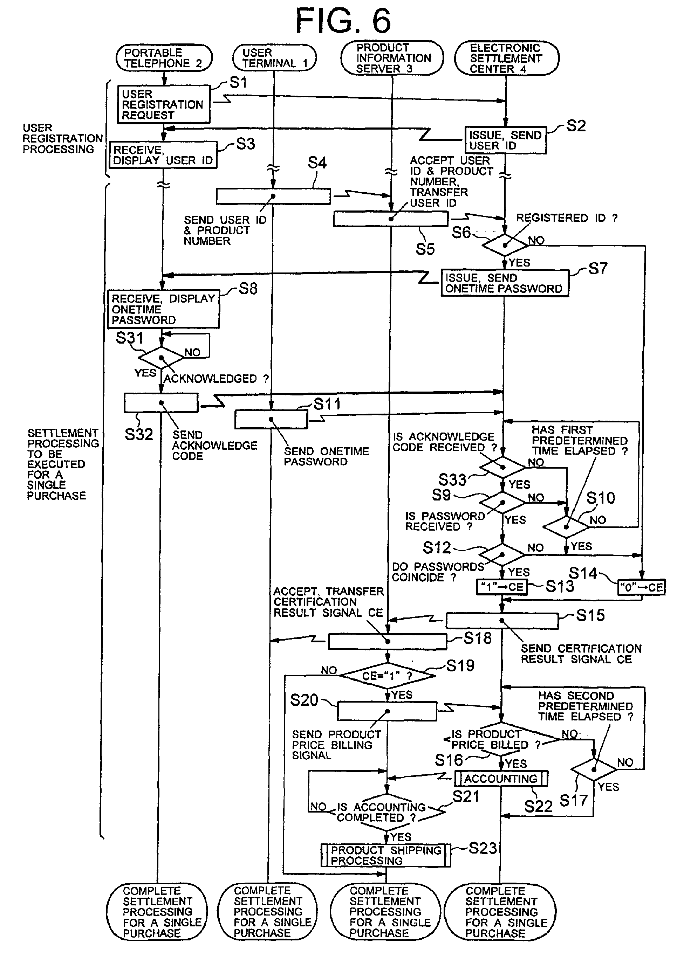

Then, as a substitute for the data communication flow shown in Fig. 2, a data communication flow shown in Fig. 6 may be adopted to conduct personal certification so that the above-mentioned problem is avoided. Note that the data communication flow of Fig. 6 is that of Fig. 2 with additional steps S31 to S33, and thus is identical to that of Fig. 2 in the other parts. Therefore, the following description will be given with particular emphasis on the operations of steps S31 to S33.

In the data communication flow shown in Fig. 6, the portable telephone 2 receives the onetime password from the electronic settlement center 4 (step S8). Subsequently, the portable telephone 2 determines whether or not an operation for acknowledging the reception of the onetime password is made, until this acknowledging operation is made (step S31). In the meantime, the registered user makes the acknowledging operation from control buttons on the portable telephone 2. If it is determined at this step S31 that the acknowledging operation is made, the portable telephone 2 sends an acknowledge code to the electronic settlement center 4 (step S32). After such an acknowledging operation, the registered user enters the onetime password displayed on the display 2a of the portable telephone 2 into the password entry field 15 on the password entry page displayed on the display 1a of the user terminal 1 as shown in Fig. 4. Then, the registered user makes a mouse operation or the like to click the SEND button 16 displayed on this page. In response to this click operation, the user terminal 1 sends the onetime password to the electronic settlement center 4 over the Internet line network 10 (step S11).

Meanwhile, the personal certification server 41 in the electronic settlement center 4 determines whether or not the acknowledge code from the portable telephone 2 is received (step S33). If it is determined at this step S33 that the acknowledge code is received, the personal certification server 41 then determines whether or not the onetime password is received over the Internet line network 10 (step S9). If it is determined at step S9 that the onetime password is received, the personal certification server 41 determines whether or not this onetime password received is identical to the one having been sent at step S7 (step S12). At step S12, if the onetime password having been sent and the onetime password returned coincide with each other, the personal certification server 41 stores the certification result signal CE having a logic level of "1," which indicates that personal certification is granted normally, into the certification result register (step S13). On the other hand, if the two do not coincide with each other, if it is determined at step S10 that the first predetermined time has elapsed, or if it is determined at step S6 that the user ID is not registered yet, the personal certification server 41 stores the certification result signal CE having a logic level of "0," which indicates that the personal certification is rejected, into the certification result register (step S14).

That is, although the onetime password is received, the certification of the onetime password at step S12 is not performed unless the acknowledge code from the portable telephone 2 is received. As a result, the certification result signal CE is forcefully turned to a logic level of "0" which indicates the rejection of the personal certification.

Therefore, according to the data communication flow shown in Fig. 6, no personal certification will be granted even if a onetime password entered at random by a third party accidentally matches with the onetime password that is issued from the electronic settlement center 4.

In some cases, the registered user might forget to make the acknowledging operation from the portable telephone 2. Then, the electronic settlement center 4, in executing step S7, may remotely control the user terminal 1 to display a massage such as "Return acknowledge code!" while issuing a onetime password.

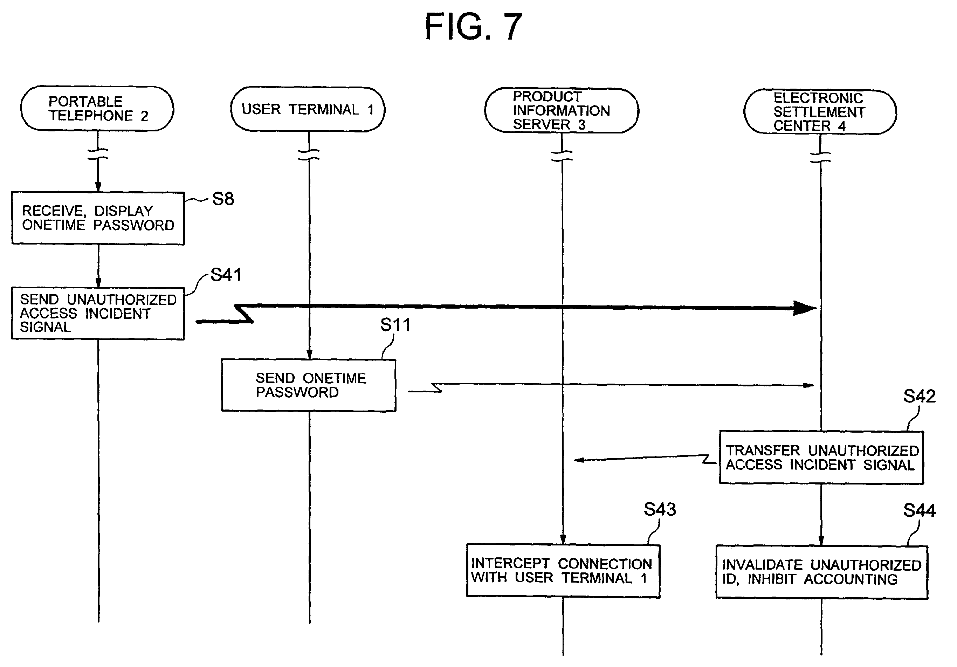

Moreover, in the cases where a third party makes unauthorized use of the registered user's ID to get access to the electronic settlement center 4 (step S4 to S7), operations according to a data communication flow shown in Fig. 7 are performed instead of those under the data communication flow shown in Fig. 2, so as to prevent subsequent unauthorized access. Note that the data communication flow of Fig. 7 is identical to that of Fig. 2 up to the operations of steps S1 to S8. Therefore, the following description will be made on the operations of step S8 and later.

Initially, when a third party makes unauthorized access as described above, the portable telephone 2 belonging to the registered user comes to receive an unintended onetime password (step S8). Thus, the registered user enters an unauthorized access incident code into the portable telephone 2. The portable telephone 2 accordingly sends an unauthorized access incident signal to the electronic settlement center 4 (step S41). The electronic settlement center 4 transfers this unauthorized access incident signal to the product information server 3 (step S42). Upon receiving this unauthorized access incident signal, the product information server 3 determines that the user ID sent by the execution of step S4 is an unauthorized ID. Then, the product information server 3 acquires the IP address of the user terminal 1 that has sent this unauthorized ID, from the source address of the IP packets. The product information server 3 subsequently discards incoming IP packets having the source address identical to the address acquired above, thereby intercepting the connection with the user terminal 1 from which the user ID is used without authorization (step S43). In the meantime, after the execution of step S42, the electronic settlement center 4 invalidates the user ID that is used without authorization as described above, and sets an inhibit accounting flag to inhibit the accounting associated with the shopping under this unauthorized ID (step S44).

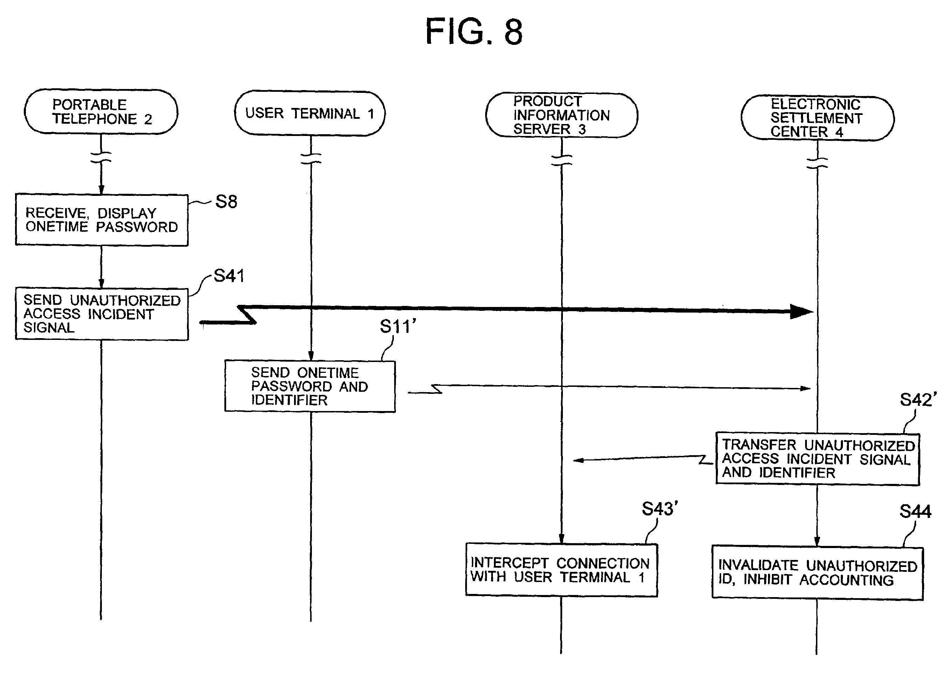

Moreover, as a substitute for the data communication flow shown in Fig. 7, a data communication flow shown in Fig. 8 may be adopted to prevent unauthorized access by third parties.

Initially, when a third party makes unauthorized access as described above, the portable telephone 2 belonging to the registered user comes to receive an unintended onetime password (step S8). Thus, the registered user enters an unauthorized access incident code into the portable telephone 2. The portable telephone 2 accordingly sends an unauthorized access incident signal to the electronic settlement center 4 (step S41). In the meantime, the third party also sends the onetime password to the electronic settlement center 4 by using the user terminal 1. On this occasion, the user terminal 1 also sends an identifier representing this user terminal 1 itself to the electronic settlement center 4 (step S11'). Upon receiving the unauthorized access incident signal, the electronic settlement center 4 transfers this unauthorized access incident signal and the above-mentioned identifier to the product information server side (step S42'). The product information server 3, when receives such an unauthorized access incident signal and an identifier, intercepts the connection with the user terminal 1 represented by this identifier (step S43'). After the execution of step S42', the electronic settlement center 4 invalidates the user ID that is used without authorization as described above, and sets an inhibit accounting flag to inhibit the accounting associated with the shopping under this unauthorized ID (step S44).

In short, the portable telephone 2 is used to make remote operations to forcefully intercept the connection between the user terminal 1, or the sender of the unauthorized ID, and the product information server 3, as well as to inhibit the accounting in the electronic settlement center 4. The above-mentioned identifier may be a cookie issued from the product information server 3 at the point of establishing the connection with the user terminal 1. Here, the product information server 3 knows the cookie on the user terminal 1, the sender of the unauthorized ID, by the point of e.g. step S4 at which the connection with the user terminal 1 is established. Accordingly, when the cookie is used as the identifier, the user terminal 1 need not send the cookie, or the identifier, to the product information server 3 via the electronic settlement center 4 at the stage of the step S11'. That is, the use of a cookie issued at the point of connection establishment allows the product information server 3 to intercept the connection with the user terminal 1 represented by this cookie simply at the stage of step S43'.

On this occasion, the Internet service provider of the user terminal 1 using the unauthorized ID may be ordered to invalidate the access authority for the user who makes this unauthorized activity. Incidentally, the Internet service provider of the user terminal 1 using the unauthorized ID can be pinpointed by the product information server 3 acquiring the source address of the IP packets sent from the unauthorized-ID-used user terminal 1 and searching a provide-specific IP address database for which provider the source address belongs to.

When third parties acknowledged by the registered user himself/herself, such as family members, make access under the user ID, the above-described measures (interception of connection, inhibition of accounting) are not always required. Then, which terminal (for example, in the office or in home) is currently in connection may be notified from the product information server 3 to the portable telephone 2 so that a determination can be made as to whether the access is that made by an acknowledged third party or unauthorized access.

As has been described, in the present invention, the Internet line is used to request secret information such as a password from the information-terminal side while the secret information is brought to the user side through transmission utilizing telephone communications over switched subscriber lines.

Therefore, according to the present invention, leakage of secret information during the process of transmission can be prevented. As a result, electronic commerce and the like on a network become feasible with security.

## Claims

1. An information service providing method for providing an information service to a plurality of information terminals through a communication line, comprising the steps of:
receiving a request from said information terminal through a first communication line; and
sending a reply to said request to said information terminal through not only said first communication line but also a second communication line different from said first communication line depending on the content of said request.

2. The information service providing method according to claim 1, wherein said first communication line is the Internet line.

3. The information service providing method according to claim 1, wherein said second communication line is a communication line capable of occupying communication temporarily.

4. The information service providing method according to claim 1, wherein said second communication line is a switched subscriber line for governing telephone communications.

5. An information service providing system for providing an information service through a communication line, comprising:
an information terminal for sending a request signal for requesting desired information through a first communication line; and
an information providing apparatus for sending said desired information to said information terminal through a second communication line in response to said request signal received through said first communication line.

6. The information service providing system according to claim 5, wherein said first communication line is the Internet line.

7. The information service providing system according to claim 5, wherein said second communication line is a communication line capable of occupying communication temporarily.

8. The information service providing system according to claim 5, wherein said second communication line is a switched subscriber line for governing telephone communications.

9. An information service providing system for providing an information service through a communication line, comprising:
a first information terminal for sending a request signal for requesting desired information through a first communication line;
a second information terminal; and
an information providing apparatus for sending said desired information to said second information terminal through a second communication line in response to said request signal received through said first communication line.

10. The information service providing system according to claim 9, wherein:
said second information terminal includes a sending part for sending said desired information received through said first communication line to said first information terminal through a short-range radio interface; and
said first information terminal includes a receiving part for receiving said desired information sent from said second information terminal.

11. The information service providing system according to claim 9, wherein said first communication line is the Internet line.

12. The information service providing system according to claim 9, wherein said second communication line is a communication line capable of occupying communication temporarily.

13. The information service providing system according to claim 9, wherein said second communication line is a switched subscriber line for governing telephone communications.

14. The information service providing system according to claim 10, wherein said second information terminal is a mobile communication terminal.

15. A personal certification method for conducting personal certification on a communication line, comprising the steps of:
upon receiving a request signal for a desired request from an information terminal through a first communication line, issuing a password in response to said request signal and sending the same to said information terminal through a second communication line; and
recognizing personal certification to said desired request when said password is returned from said information terminal through said first communication line.

16. The personal certification method according to claim 15, wherein said first communication line is the Internet line.

17. The personal certification method according to claim 15, wherein said second communication line is a communication line capable of occupying communication temporarily.

18. The personal certification method according to claim 15, wherein said second communication line is a switched subscriber line for governing telephone communications.

19. A personal certification system for conducting personal certification over a wide area network, comprising:
an information server for providing desired information over said wide area network;
a personal certification center for governing data communications through a switched subscriber line and conducting personal certification for subscribers;
a first information terminal connected to said wide area network; and
a second information terminal capable of data communications with said personal certification center through said switched subscriber line, and wherein
said information server supplies a password request signal to said personal certification center when a request signal for making a desired request is supplied thereto from said first information terminal over said wide area network, and
said personal certification center generates a password in response to said password request signal, sends the same to said second information terminal through said switched subscriber line, and when said password is supplied thereto from said first information terminal over said wide area network, supplies said information server with a certification result signal indicating that personal certification is granted normally.

20. The personal certification system according to claim 19, wherein said wide area network is the Internet.

21. The personal certification system according to claim 19, wherein:
said second information terminal includes a sending part for sending said password received through said first communication line to said first information terminal through a short-range radio interface; and
said first information terminal includes a receiving part for receiving said password sent from said second information terminal.

22. The personal certification system according to claim 19, wherein said second information terminal is a mobile communication terminal.

23. An electronic commerce method for conducting a product sale on a communication line, comprising the steps of:
upon receiving a purchase request for a desired product from an information terminal through a first communication line, issuing a password in response to said purchase request and sending the same to said information terminal through a second communication line; and
performing accounting on said desired product when said password is returned from said information terminal through said first communication line.

24. The electronic commerce method according to claim 23, wherein said first communication line is the Internet line.

25. The electronic commerce method according to claim 23, wherein said second communication line is a communication line capable of occupying communication temporarily.

26. The electronic commerce method according to claim 23, wherein said second communication line is a switched subscriber line for governing telephone communications.

27. An electronic commerce system for conducting a product sale over a wide area network, comprising:
a product information server for providing product information over said wide area network;
an electronic settlement center for governing data communications through a switched subscriber line and performing accounting for subscribers;
a first information terminal connected to said wide area network; and
a second information terminal capable of data communications with said electronic settlement center through said switched subscriber line, and wherein
said product information server supplies a password request signal to said electronic settlement center when a product number for designating a desired product in said product information is supplied thereto from said first information terminal over said wide area network, and
said electronic settlement center generates a password in response to said password request signal, sends the same to said second information terminal through said switched subscriber line, and when said password is supplied thereto from said first information terminal over said wide area network, supplies said product information server with a certification result signal indicating that personal certification is granted normally.

28. The electronic commerce system according to claim 27, wherein:
said product information server, in response to said certification result signal, supplies said electronic settlement center with a product price billing signal for billing the price of said desired product designated by said product number; and
said electronic settlement center, in response to said product price billing signal, performs accounting to transfer the price of said desired product into a bank account of the seller of said desired product and withdraw the price of said desired product from a bank account of the owner of said second information terminal.

29. The electronic commerce system according to claim 27, wherein said wide area network is the Internet.

30. The electronic commerce system according to claim 27, wherein:
said second information terminal includes a sending part for sending said password received through said switched subscriber line to said first information terminal through a short-range radio interface; and
said first information terminal includes a receiving part for receiving said password sent from said second information terminal.

31. An information terminal for acquiring desired information through a communication line,
the information terminal sending a request signal for requesting said desired information to an information providing apparatus through a first communication line and receiving said desired information sent from said information providing apparatus through a second communication line different from said first communication line.

32. An information providing apparatus for providing desired information through a communication line,
the information providing apparatus, upon receiving a request signal for requesting said desired signal through a first communication line, sending said desired information through a second communication line different from said first communication line.

33. A personal certification apparatus for conducting personal certification through a communication line, comprising:
a password generating part for generating a password when a password request signal is supplied thereto from a first information terminal over a wide area network;
a sending part for sending said password through a switched subscriber line to a second information terminal different from said first information terminal; and
a password authentication part for making password authentication based on whether or not a password, when supplied thereto from said first information terminal over said wide area network, coincides with said password generated by said password generating means.
